(19) Europäisches Patentamt
European Patent Office
Office européen des brevets

(11) EP 1 341 002 B1

(12) EUROPÄISCHE PATENTSCHRIFT

(45) Veröffentlichungstag und Bekanntmachung des Hinweises auf die Patenterteilung:
28.02.2007 Patentblatt 2007/09

(51) Int Cl.:
*G01S 13/524* (2006.01)

(21) Anmeldenummer: 03000830.4

(22) Anmeldetag: 15.01.2003

(54) **Verfahren zur Reduzierung der Falschalarmrate in Radarbildern**

Method for reducing the false alarm rate in radar images

Procédé pour réduire le taux de fausses alarmes dans des images radar

(84) Benannte Vertragsstaaten:
AT BE BG CH CY CZ DE DK EE ES FI FR GB GR HU IE IT LI LU MC NL PT SE SI SK TR

(30) Priorität: 22.02.2002 DE 10207465

(43) Veröffentlichungstag der Anmeldung:
03.09.2003 Patentblatt 2003/36

(73) Patentinhaber: EADS Deutschland GmbH
85521 Ottobrunn (DE)

(72) Erfinder:
• **Bickert, Bernhard**
**89079 Ulm-Einsingen (DE)**

• **Meyer-Hilberg, Jochen, Dr.**
**89275 Elchingen (DE)**

(74) Vertreter: **Meel, Thomas**
**Patentassessor,**
**c/o Dornier GmbH**
**LPI**
**88039 Friedrichshafen (DE)**

(56) Entgegenhaltungen:
**DE-A- 10 012 411          DE-A- 19 906 149**

**Beschreibung**

Die Erfindung betrifft ein Verfahren zur Reduzierung der Falschalarmrate gemäß dem Oberbegriff des Patentanspruchs 1.

Radar-Rohdaten bestehen aus einer Mischung von Signalen, z.B. Echos von feststehenden und bewegten Objekten und Störungen, z.B. breit- und schmalbandigem Rauschen. In der Regel sollen bei der Auswertung der Radardaten die Störungen unterdrückt werden, so dass die interessierenden Signale gut detektierbar werden.

Zur Extraktion von bewegten Objekten wird standardmäßig eine sogenannte MTI-Signalverarbeitung (Moving Target Indication) verwendet. Bestandteil dieser Signalverarbeitung ist neben der Identifikation und Erkennung durch eine Entfernungs-Dopplerfrequenzanalyse die Parameterschätzung, z.B. Entfernung, Blickwinkel und Geschwindigkeit, bewegter Ziele. Dabei wird das Echo des bewegten Ziels im wesentlichen durch das Empfängerrauschen gestört. Im Falle von Luft-Boden-Radargeräten oder Luft-Boden Radarbetriebsarten, die durch eine relativ deutliche spektrale Verbreiterung der Hauptstrahlrichtung der Antenne (Antennenhauptkeule) gekennzeichnet sind, treten zusätzlich Echos von feststehenden Objekten auf, die fälschlicherweise als bewegte Ziele interpretiert werden. Diese Falschzielalarme treten vorwiegend im Entfernungs-Dopplerfrequenzbereich der Hauptstrahlrichtung der Antenne (Antennenhauptkeule) und bei geringem Haupt/Nebenkeulenabstand der Antenne auch im Antennennebenzipfelbereich auf.

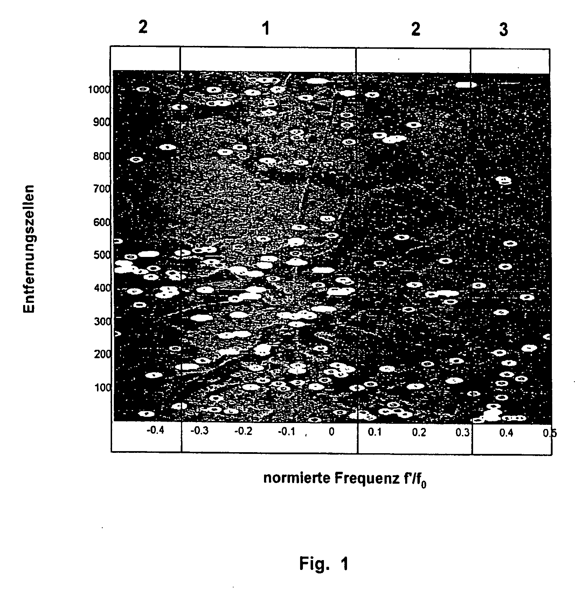

Fig. 1 zeigt ein MTI-Radarbild mit detektierten Fest- und Bewegtzielen, die deutlich zu erkennen über das gesamte Radarbild verstreut sind. Dabei handelt es sich um Detektionen im Antennenhauptkeulenbereich 1, im Nebenkeulenbereich 2 und im antennenkeulenfreien Bereich 3. Bei einer großen Anzahl von Detektionen handelt es sich um Festzielechos, die zu Falschalarmen führen, welche erkannt und eliminiert werden müssen. Um Festzielechos zu unterdrücken wird üblicherweise das sogenannte STAP-Verfahren (Space Time Adaptive Processing) angewendet, welches z.B. aus DE 100 12 411 A1 oder DE 100 35 530 A1 bekannt ist. Das STAP-Verfahren nutzt dabei die deterministischen Amplituden- und Phasenbeziehungen zwischen benachbarten An tennenkanälen eines kohärenten Puls-Doppler-Radargeräts. Diese Beziehungen werden dabei adaptiv aus den Radar-Rohdaten geschätzt. Das STAP-Verfahren wird aber üblicherweise nur im Antennenhauptkeulenbereich angewendet.

In der üblichen MTI Signalverarbeitung wird die Zieldetektion von bewegten Zielen innerhalb des antennenkeulenfreien Bereichs mittels CFAR-Algorithmen (Constant False Alarm Rate) durchgeführt. Dabei wird der Amplitudenbetrag oder die Leistung eines potentiellen Ziels mit dem durchschnittlichen Amplitudenbetrag oder der durchschnittlichen Leistung seiner Umgebung verglichen. Überschreitet das Amplitudenbetrags- oder Leistungsverhältnis einen vorgebbaren Schwellenwert kommt es zu Zielalarmen. Diese werden auf Grund der Dopplerverarbeitung bewegten Zielen zugeordnet. Eine Anwendung des Verfahrens im Antennenhaupt- oder Antennennebenkeulenbereich wird normalerweise nicht durchgeführt. Aufgrund der Inhomogenität der Umgebung ergeben sich extrem viele Detektionen, die größtenteils nicht bewegten Objekten zuzuordnen wären.

Aufgabe der Erfindung ist, ein Verfahren anzugeben, mit dem eine gegenüber dem Stand der Technik wesentliche Reduzierung der Falschalarmrate in Radarbildern ermöglicht wird.

Diese Aufgabe wird durch das Verfahren gemäß den Merkmalen des Anspruchs 1 gelöst. Vorteilhafte Ausführungen des erfindungsgemäßen Verfahrens sind Gegenstand von Unteransprüchen.

Das erfindungsgemäße Verfahren ist gekennzeichnet durch folgenden Ablauf:

-  Anwenden eines STAP-Filters auf die Antennennebenkeule im Radarbild zur Unterdrückung von Festzielen in der Antennennebenkeule,

-  Vergleichen des Amplitudenbetrags oder Leistung jeder Entfernungs-Dopplerfrequenzzelle mit einer über alle Entfernungs-Dopplerfrequenzzellen konstanten vorgebbaren Schwelle und Zusammenfassen der daraus gewonnenen Alarme, wobei nur die Alarme herangezogen werden, deren Amplitudenbeträge oder Leistungen oberhalb der vorgebbaren Schwelle zu Clustern, wobei zuerst eine in Dopplerfrequenzrichtung gerichtete Zusammenfassung von Alarmen aufgrund ihrer minimalen Distanz zueinander zu Dopplerfrequenzclustern und anschließend eine in Entfernungsrichtung gerichtete Zusammenfassung von Dopplerfrequenzclustern aufgrund ihrer minimalen Distanz zueinander zu Entfernungs-Dopplerfrequenzclustern erfolgt,

-  Vergleichen einer Zielfunktion mit einer Testfunktion, wobei die Testfunktion eine Schnittfunktion einer zweidimensionalen charakteristischen Funktion der Amplituden- und Phasenverläufe der Antennenhauptkeule als Funktion der Dopplerfrequenz ist und die Zielfunktion eine für jeden Alarm berechnete charakteristische Funktion des Amplituden- und Phasenverlaufs des jeweiligen Ziels als Funktion der Dopplerfrequenz an der Dopplerfrequenzposition des jeweiligen Ziels ist und

-  Verwendung von Auswahlkriterien aus auf die Ziel- und Testfunktion angewendeten kombinierten Berechnungsmethoden zur Klassifikation eines jeweiligen Zielalarms als Bewegtziel oder Festzielalarms, wobei eine Korrelation der Zielfunktion mit den Testfunktionen und gemäß dem Least-Mean-Square-LMS-Ansatz die kleinsten Fehlerquadrate zwischen der Ziel- und den Testfunktionen berechnet werden.

Ein Vorteil des erfindungsgemäßen Verfahrens ist, dass unter Ausnutzung der Mehrkanaligkeit des kohärenten Radarsystems, die Falschalarmrate, d.h. die Entscheidung ein Festziel oder eine Störung als Bewegtziel zu deklarieren, deutlich reduziert wird. Darüber hinaus ist es mit dem erfindungsgemäßen Verfahren möglich, auch bei schlechtem Hauptkeulen-/Nebenzipfelabstand der Antenne eine verbesserte Reduzierung der Falschalarmrate zu erzielen, da es mit dem erfindungsgemäßen Verfahren möglich ist, den Antennennebenkeulenverlauf adaptiv zu schätzen.

Die Erfindung mit ihren einzelnen Verfahrensschritten sowie weitere vorteilhafte Ausführungen der Erfindung werden im folgenden anhand von Figuren näher erläutert.

Es zeigen:

Fig. 1 : ein typisches Entfernungs-Dopplerfrequenzbild mit detektierten Fest- und Bewegtzielechos,

Fig. 2 : das Entfernungs-Dopplerfrequenzbild von Fig. 1 nach erfolgter Clusterung,

Fig. 3 : den beispielhaften Verlauf des Betrags der charakteristischen Funktion $X_{char}(^f, f')$,

Fig. 4 : den beispielhaften Verlauf einer Testfunktion als Schnitt aus der charakteristischen Funktion $X_{char}(f, f')$,

Fig. 5 : den beispielhaften Verlauf einer Zielfunktion für einen Zielalarm an der Dopplerfrequenzposition $f_z$

Fig. 6a : den beispielhaften Verlauf des Ergebnisses der Korrelation der Zielfunktion mit Schnitten aus der charakteristischen Funktion $X_{char}(f, f')$,

Fig. 6b : den beispielhaften Verlauf des Ergebnisses des LMS-Ansatzes zwischen der Ziel- und den Testfunktionen,

Fig. 7 : die beispielhaften Verläufe der Wahrscheinlichkeiten der Auswahlkriterien.

Nach der STAP-Filterung, dem ersten Schritt des erfindungsgemäßen Verfahrens, sind die Festziele größtenteils unterdrückt. Festziele mit großen Amplituden sind allerdings im MTI-Radarbild noch sichtbar und führen weiterhin zu Falschalamen. Erfindungsgemäß werden in einem zweiten Schritt in den STAP gefilterten Radarbildern die Beträge oder Leistungen der einzelnen Entfernungs-Dopplerfrequenzzelle mit einer, über alle Entfernungs-Dopplerfrequenzzellen konstanten Schwelle verglichen. Die Schwelle kann dabei vorteilhaft aus dem Mittelwert und der Varianz über alle Zellen abgeleitet werden. Daraus ergibt sich der Vorteil, dass die Rechenzeit gegenüber dem CFAR-Verfahren deutlich reduziert wird.

Die aus diesem Schwellenvergleich gewonnenen Alarme werden in Clustern zusammengefasst. Die Clusterung erfolgt hierbei zunächst in Dopplerfrequenzrichtung. Alarme, die in Dopplerfrequenzrichtung einen minimalen Abstand zueinander aufweisen, werden zu sogenannten Dopplerfrequenzclustern zusammengefasst. Anschließend erfolgt die Clusterung in Entfernungsrichtung zu sogenannten Entfernungs-Dopplerfrequenzclustern. Dabei werden analog zur bereits beschriebenen Dopplerfrequenzclusterung die Dopplerfrequenzcluster entsprechend ihrem minimale Abstand in Entfernungsrichtung zu Entfernungs-Dopplerfrequenzclustern zusammengefasst.

Der Vorteil dieser zweistufigen Clusterung ist, dass sich eine erhebliche Reduktion der Rechenzeit gegenüber einer einstufigen Clusterung ergibt. Der Vorteil dieser Clusterung ist, dass sowohl die Varianz der im folgenden zu berechnenden Parameter als auch die Anzahl der zu bearbeitenden Alarme erheblich reduziert werden.

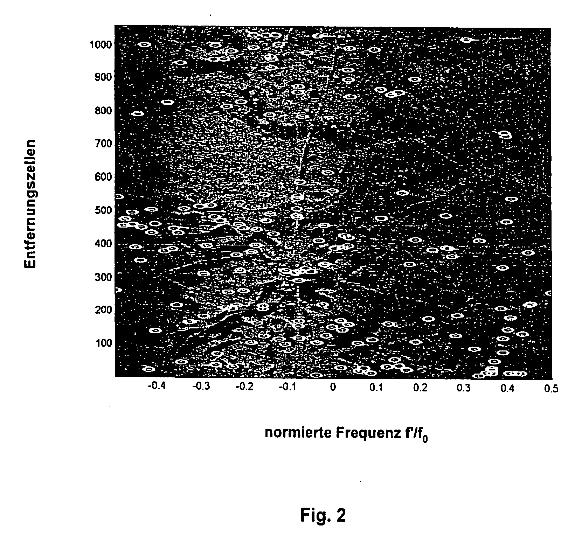

Fig. 2 zeigt das Entfernungs-Dopplerfrequenzbild aus Fig. 1 nach erfolgter Clusterung. Deutlich ist zu erkennen, dass die mehrfache Häufung von Detektionen erheblich reduziert wurde.

In dem dritten erfindungsgemäßen Verfahrensschritt werden die aus den vorherigen zwei Verfahrensschritten verbliebenen Alarme als Bewegt- oder Festzielalarme anhand ihres Amplituden- und Phasenverlaufs über der Frequenz klassifiziert. Dies erfolgt dadurch, dass der Amplituden- und Phasenverlauf der Antennenhauptkeule adaptiv geschätzt wird und die Amplituden- und Phaseninformation der vermeintlichen Ziele (Alarme) mit dem adaptiv geschätzten Verlauf geeignet verglichen werden. Dazu wird in einem ersten Schritt die z.B. aus DE 100 355 30 A1 bekannte STAP-Filterfunktion

$$X_{STAP}(f) = H_1(f) \cdot X_1(f) - H_2(f) \cdot X_2(f)$$

mit

$X_1(f)$, $X_2(f)$ :     Dopplerfrequenzwert Kanal 1, 2 des MTI-Radargeräts an der Frequenzposition f,

$H_1(f)$, $H_2(f)$ :     STAP Filterkoeffizient Kanal 1, 2 des MTI-Radargeräts an der Frequenzposition f,

$X_{STAP}(f)$ :     STAP gefilterter Dopplerfrequenzwert

$f \in [f_{min},...,f_{max}]$ :     Frequenz f aus dem Frequenzbereich $f_{min}$ bis $f_{max}$

benutzt und die Dopplerfrequenzwerte $X_1(f)$, $X_2(f)$ durch die STAP Filterwerte $H_2(f)$, $H_1(f)$ ersetzt. Damit ergibt sich eine adaptive zweidimensionale charakteristische Funktion der Amplituden- und Phasenverläufe als Funktion der Dopplerfrequenzen f und f' innerhalb der Antennenhauptkeule in der Form

$$X_{char}(f, f') = H_1(f) \cdot H_2(f') - H_2(f) \cdot H_1(f').$$

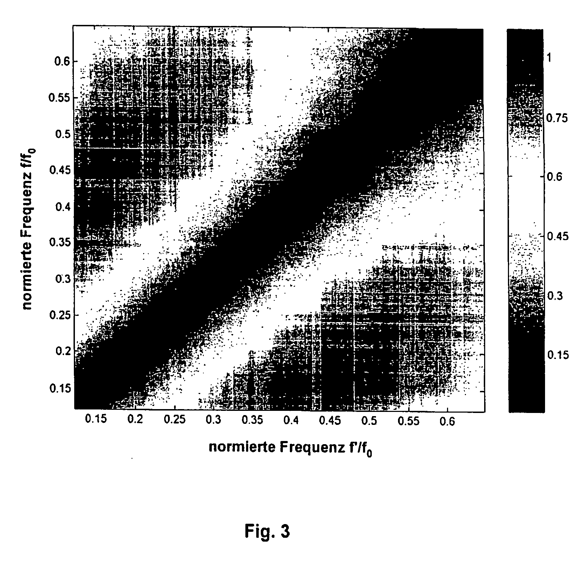

Fig. 3 zeigt den beispielhaften Verlauf des Betrags der charakteristischen Funktion $X_{char}(f, f')$. An der Stelle f' $\cong$ f ist $H_1(f) \cdot H_2(f'=f) \cong H_2(f) \cdot H_1(f'=f)$, somit ist $X_{char}(f, f'=f) \cong 0$. Der sich daraus ergebene Verlauf kleiner Werte entlang einer Diagonalen ist charakteristisch für diese Funktion. Am Amplitudenverlauf ist der spektrale Verlauf der Antennenhauptkeulen abzulesen, am Phasenverlauf die räumliche Beziehung beider Antennenkanäle.

Für die weiteren Berechnungen werden Schnitte $X_{Test}(f)$ aus der Funktion $X_{char}(f, f')$ verwendet:

$$X_{Test}(f)\big|_{f_{min}} = H_1(f) \cdot H_2(f_{min}) - H_2(f) \cdot H_1(f_{min})$$

$$X_{Test}(f)\big|_{f_{min+1}} = H_1(f) \cdot H_2(f_{min+1}) - H_2(f) \cdot H_1(f_{min+1})$$

$$\cdot \qquad \cdot \qquad \cdot$$

$$\cdot \qquad \cdot \qquad \cdot$$

$$X_{Test}(f)\big|_{f_{max}} = H_1(f) \cdot H_2(f_{max}) - H_2(f) \cdot H_1(f_{max})$$

Jede dieser Schnittfunktionen wird im Folgenden auch als "Testfunktion" bezeichnet.

Werden in einem zweiten Schritt in der bekannten STAP-Filterfunktion $X_{STAP}(f)$ statt der Dopplerfrequenzwerte $X_1(f)$, $X_2(f)$ die aktuellen Spektralwerte $A_1(f_z)$, $A_2(f_z)$ an der Zieldopplerposition $f_z$ eingesetzt, so ergibt sich eine Funktion, die im Weiteren als "Zielfunktion" bezeichnet wird, gemäß

$$X_{Ziel}(f) = H_1(f) \cdot A_2(f_z) - H_2(f) \cdot A_1(f_z)$$

mit

$f_z$: Dopplerfrequenzposition des Zielalarms.

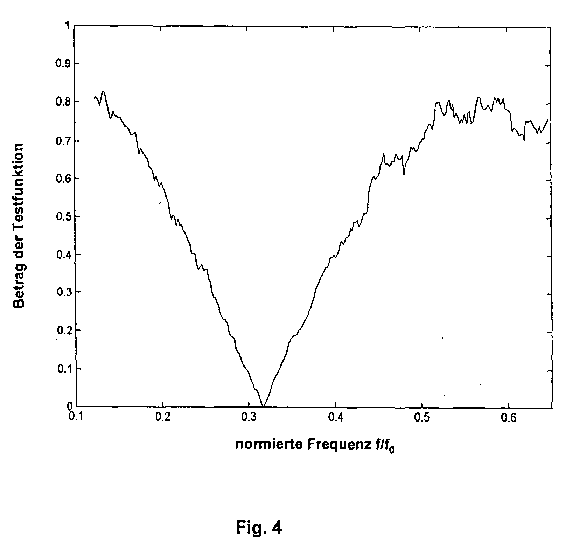

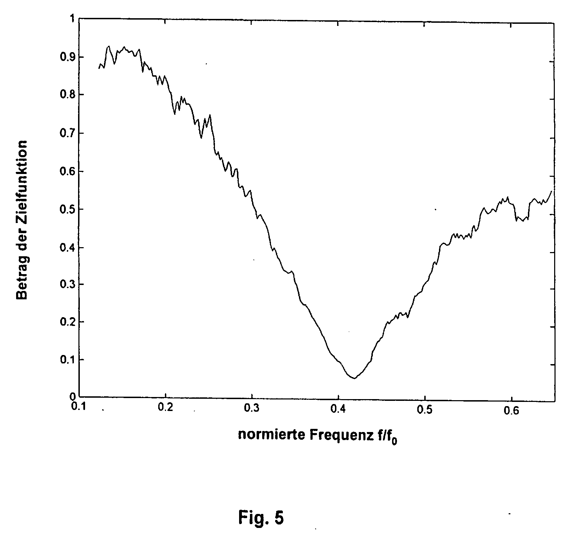

Die Verläufe einer beispielhaften Testfunktion $X_{Test}(f)$ und einer beispielhaften Zielfunktion $X_{Ziel}(f)$ sind in Fig. 4 und Fig. 5 dargestellt. Der Verlauf der Zielfunktion ähnelt dabei dem spektral verschobenen Verlauf der Testfunktion.

Zwei unterschiedliche Vergleiche der Zielfunktion $X_{Ziel}(f)$ mit den Testfunktionen $X_{Test}(f)\big|_{f'}$, wobei weitestgehend die Ähnlichkeit im Verlauf der beiden Funktionen betrachtet wird, machen es möglich, die Alarme der Bewegtziele gegenüber den Alarmen der Festziele bzw. denen des Signalrauschen zu trennen. Erfindungsgemäß wird auf die Ziel- und Testfunktionen eine geeignete kombinierte Berechnungs- und Bewertungsmethode angewendet.

Erfindungsgemäß werden die Kreuzkorrelation Y(f') der Zielfunktion mit den Schnitten (Testfunktionen) aus der charakteristischen Funktion $X_{char}(f, f')$ berechnet:

$$Y(f^{'}) = \sum_{f=f_{min}}^{f=f_{max}} X_{Ziel}(f) \cdot X_{char}(f, f^{'})$$

Außerdem werden erfindungsgemäß nach dem Least-Mean-Square-(LMS)Ansatz die kleinsten Fehlerquadrate s(f') zwischen Ziel- und den Testfunktionen berechnet:

$$s(f^{'}) = \sum_{f=f_{min}}^{f=f_{max}} \left( X_{Ziel}(f) - X_{char}(f, f^{'}) \right)^2$$

Diese werden auf die Anzahl N der Dopplerzellen im Frequenzbereich $f_{min}$ bis $f_{max}$ normiert, die quadratische Wurzel berechnet und der entsprechende Wert logarithmiert, woraus sich die endgültige Funktion L(f) ergibt:

$$S(f^{'}) = 20 \cdot \log_{10} \left( \sqrt{\frac{s(f^{'})}{N}} \right)$$

Die beiden Berechnungsstufen werden insbesondere parallel ausgeführt. Dabei kann, vorausgesetzt einer gewissen Homogenität der charakteristischen Funktion, die Anzahl der Testfunktionen beschränkt werden.

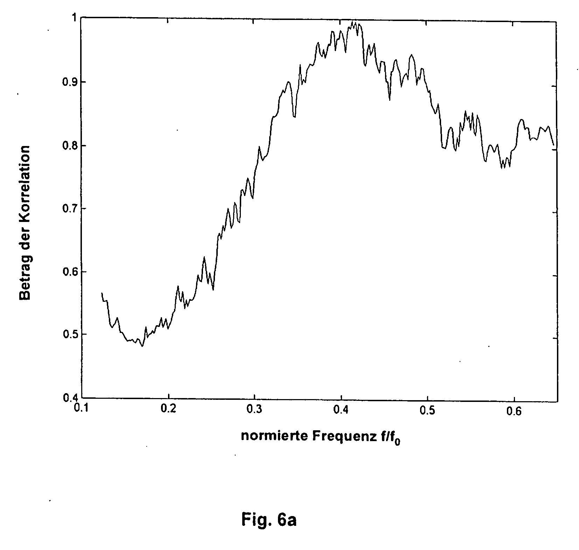

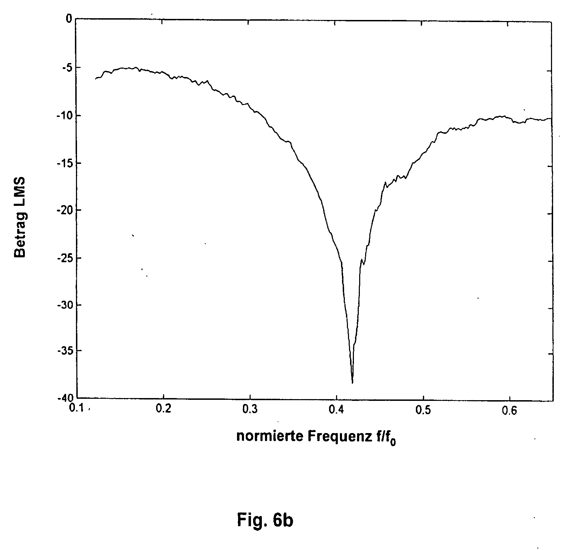

Fig. 6a und 6b zeigen das Ergebnis des Kombinationsverfahrens. Fig. 6a zeigt den Verlauf des Betrags der Kreuzkorrelation Y(f') zwischen der Zielfunktion aus Fig. 5 und den Schnitten aus der charakteristischen Funktion $X_{char}$ (f, f') aus Fig. 3.

Entsprechend zeigt Fig. 6b den Verlauf des quadratischen Minimums L(f') zwischen der Zielfunktion aus Fig. 5 und den Schnitten aus der charakteristischen Funktion $X_{char}$ (f, f') aus Fig. 3

Erfindungsgemäß liefern die kombinierten Berechnungen Auswahlkriterien, mit denen Zielalarme als Fest- oder Bewegtzielalarme klassifiziert werden können. In einer vorteilhaften Ausführung des erfindungsgemäßen Verfahrens werden folgende Auswahlkriterien verwendet:

1. die, aus der Abweichung zwischen der detektierten Dopplerfrequenzposition $f_z$ und der absoluten Position des Minimums des LMS-Ansatzes für das jeweilige Ziel geschätzte Zielgeschwindigkeit,
2. die Amplitude des Maximums der Korrelationsfunktion,
3. die Amplitude des Minimums des LMS-Ansatzes,
4. der Abstand der Positionen des Maximums der Korrelationsfunktion und der des Minimums des LMS-Ansatzes.

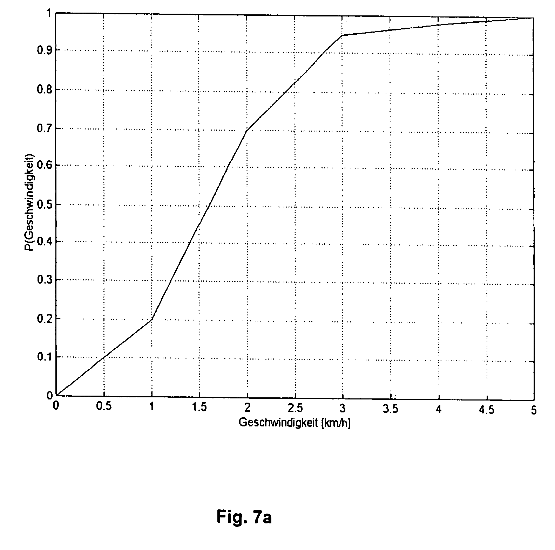

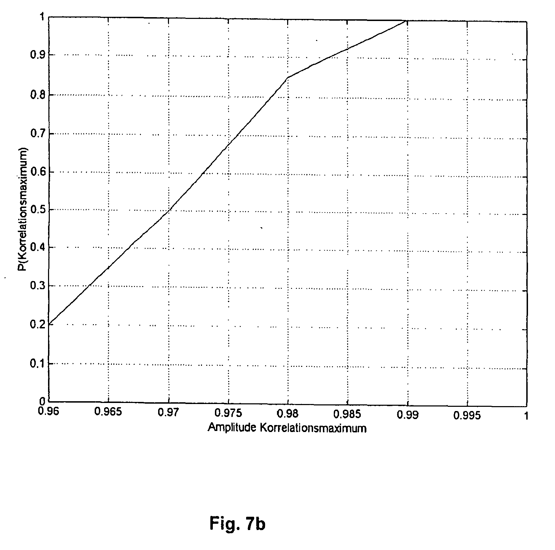

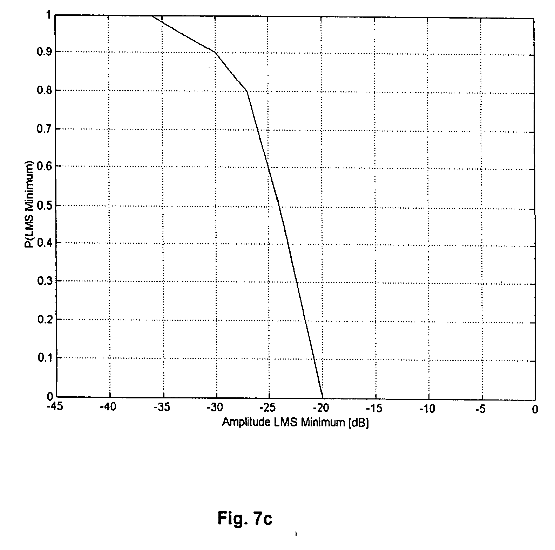

Gemäß dem ersten Auswahlkriterium wird ein Alarm dann als Bewegtziel deklariert, wenn seine berechnete Geschwindigkeit einen vorgebbaren Geschwindigkeitsschwellenwert überschreitet. Dementsprechend ist ein Alarm als Festziel zu deklarieren, wenn seine Geschwindigkeit unterhalb des Schwellwertes liegt. In einer vorteilhaften Ausführung ist das Auswahlkriterium "Geschwindigkeit" mit einer Wahrscheinlichkeit $P(v_{Ziel})$ gewichtet. Ein Alarm wird in diesem Fall mit einer gewissen Wahrscheinlichkeit als Fest- oder Bewegtzielalarm klassifiziert. Diese Wahrscheinlichkeit kann dabei auf empirischen Erfahrungen beruhen. Fig. 7a zeigt den Verlauf der Wahrscheinlichkeitsverteilung für das Auswahlkriterium "Geschwindigkeit" In Fig. 7b ist der Verlauf der Wahrscheinlichkeit für ein Bewegtziel als Funktion des Betrages des Korrelationsmaximums dargestellt. Entsprechend zeigt Fig. 7c den Verlauf der Wahrscheinlichkeit für ein Bewegtziel als Funktion der logarithmierten Amplitude des Minimums des LMS-Ansatzes.

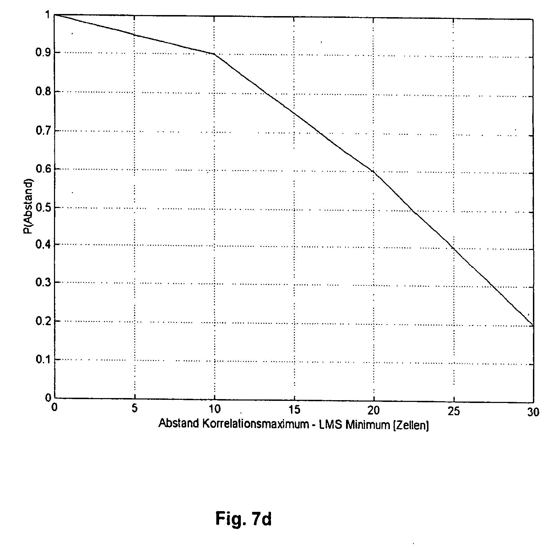

Diejenigen Zielalarme, die durch Empfängerrauschen verursacht werden, können über das vierte Auswahlkriterium unterdrückt werden. Dabei wird der Abstand der Position des Maximums des Betrages der Korrelationsfunktion und der Position des Minimums der logarithmierten Amplitude des LMS-Ansatzes mit einer Wahrscheinlichkeit gewichtet. Fig. 7d zeigt den Wahrscheinlichkeitsverlauf des vierten Auswahlkriteriums.

Vorteilhaft führen die vier Einzelwahrscheinlichkeiten $P_i$ der einzelnen Auswahlkriterien zu einer Gesamtwahrscheinlichkeit $P_{Gesamt}$ gemäß

$$P_{Gesamt} = \prod_{i=1}^{4} P_i \; .$$

Die Gesamtwahrscheinlichkeit $P_{Gesamt}$ wird vorteilhaft mit einem vorgebbaren Schwellenwert $P_{Schwelle}$ gemäß

$$P_{Gesamt} \geq P_{Schwelle}$$

verglichen. Alarme, deren Gesamtwahrscheinlichkeit $P_{Gesamt}$ höher oder gleich dem Schwellenwert $P_{Schwelle}$ ist, werden somit definitionsgemäß als Bewegtzielalarme klassifiziert. Alarme, deren Gesamtwahrscheinlichkeit geringer als der Schwellwert ist, werden definitionsgemäß als Festzielalarme klassifiziert.

**Patentansprüche**

1. Verfahren zur Reduzierung der als Falschalarmrate bezeichneten Anzahl der Alarme von den in den Radarbildern eines zwei- oder mehrkanaligen MTI-Radargeräts mit Antennenhaupt- und nebenkeulen fälschlicherweise als Bewegtziele deklarierten Festzielen, wobei die Unterdrückung der Festzielechos gegenüber den Bewegtzielechos innerhalb der Antennenhauptkeule mittels eines Space-Time Adaptive Processing - STAP - Filters erfolgt, **gekennzeichnet durch** folgenden Ablauf

    - Anwenden eines STAP-Filters auf die Antennennebenkeule im Radarbild zur Unterdrückung von Festzielen in der Antennennebenkeule,
    - Vergleichen der Amplitudenbeträge oder Leistungen der Entfernungs-Dopplerfrequenzzellen mit einer konstanten vorgebbaren Schwelle und Zusammenfassen der daraus gewonnenen Alarme, wobei nur die Alarme herangezogen werden, deren Amplitudenbeträge oder Leistungen oberhalb der vorgebbaren Schwelle liegen, zu Clustern, wobei zuerst eine in Dopplerfrequenzrichtung gerichtete Zusammenfassung von Alarmen aufgrund ihrer minimalen Distanz zueinander zu Dopplerfrequenzclustern und anschließend eine in Entfernungsrichtung gerichtete Zusammenfassung von Dopplerfrequenzclustern aufgrund ihrer minimalen Distanz zueinander zu Entfernungs-Dopplerfrequenzclustern erfolgt,
    - Vergleichen einer Zielfunktion mit einer Testfunktion, wobei die Testfunktion eine Schnittfunktion einer zweidimensionalen charakteristischen Funktion der Amplituden- und Phasenverläufe der Antennenhauptkeule als Funktion der Dopplerfrequenz ist und die Zielfunktion eine für jeden Alarm berechnete charakteristische Funktion des Amplituden- und Phasenverlaufs des jeweiligen Ziels als Funktion der Dopplerfrequenz an der Dopplerfrequenzposition des jeweiligen Ziels ist und
    - Verwendung von Auswahlkriterien aus auf die Ziel- und Testfunktion angewendeten kombinierten Berechnungsmethoden zur Klassifikation eines jeweiligen Zielalarms als Bewegtziel oder Festzielalarms, wobei eine Korrelation der Zielfunktion mit den Testfunktionen und gemäß dem Least-Mean-Square-LMS-Ansatz die kleinsten Fehlerquadrate zwischen der Ziel- und den Testfunktionen berechnet werden

2. Verfahren nach Anspruch 1, **dadurch gekennzeichnet, dass** die konstante vorgebbare Schwelle aus dem Mittelwert und der Varianz der Amplituden oder Leistungen aller Entfernungs-Dopplerfrequenzzellen ermittelt wird.

3. Verfahren nach einem der vorangehenden Ansprüche, **dadurch gekennzeichnet, dass** die zweidimensionale charakteristische Funktion der Amplituden- und Phasenverläufe der Antennenhauptkeule berechnet wird gemäß

$$X_{char}(f, f') = H_1(f) \cdot H_2(f') - H_2(f) \cdot H_1(f')$$

mit

$H_1(f)$, $H_2(f)$ : STAP - Filterkoeffizienten
$f, f' \in [f_{min},...,f_{max}]$ : Dopplerfrequenz

**4.** Verfahren nach einem der vorangehenden Ansprüche, **dadurch gekennzeichnet, dass** für jeden Zielalarm die charakteristische Funktion des Amplituden- und Phasenverlaufs des jeweiligen Ziels berechnet wird gemäß

$$X_{Ziel}(f) = H_1(f) \cdot A_2(f_z) - H_2(f) \cdot A_1(f_z)$$

mit

> $A_1$, $A_2$ : komplexe Amplituden des Zielalarms
> f : Dopplerfrequenz
> $f_z$ : Dopplerfrequenzposition des Zielalarms

**5.** Verfahren nach Anspruch 3, **dadurch gekennzeichnet, dass** die Testfunktion eine eindimensionale Funktion gemäß eines Schnitts mit f' = konstant aus der zweidimensionalen charakteristischen Funktion $X_{char}(f, f')$ ist.

**6.** Verfahren nach einem der vorangehenden Ansprüche, **dadurch gekennzeichnet, dass** die Korrelation der Zielfunktion mit den Testfunktionen und die Berechnung der kleinsten Fehlerquadrate zwischen der Ziel- und den Testfunktionen gemäß dem Least-Mean-Square-LMS-Ansatz in einem parallel ausgeführten Verfahren erfolgt.

**7.** Verfahren nach Anspruch 6, **dadurch gekennzeichnet, dass** aus der Korrelationsfunktion und dem Ergebnis der Berechnung nach dem LMS-Ansatz folgende vier Auswahlkriterien zur Klassifikation eines Ziels als Bewegtziel oder Festziel extrahiert werden:

> 1. die aus dem Abstand zwischen der detektierten Dopplerfrequenzposition $f_z$ und der absoluten Position des Minimums des LMS-Ansatzes für das jeweilige Ziel geschätzte Zielgeschwindigkeit,
> 2. die Amplitude des Maximums der Korrelationsfunktion,
> 3. die Amplitude des Minimums des LMS-Ansatzes,
> 4. der Abstand der Position des Maximums des Betrages der Korrelationsfunktion und der Position des Minimums der logarithmierten Amplitude des LMS-Ansatzes.

**8.** Verfahren nach Anspruch 7, **dadurch gekennzeichnet, dass** jedes Auswahlkriterium mit einer vorgebbaren Wahrscheinlichkeit $P_i$ mit der das identifizierte Ziel ein Bewegtziel ist gewichtet wird.

**9.** Verfahren nach Anspruch 8, **dadurch gekennzeichnet, dass** die sich aus den Einzelwahrscheinlichkeiten $P_i$ ergebende Gesamtwahrscheinlichkeit $P_{gesamt}$ mit einem Schwellwert verglichen wird.

**Claims**

**1.** Method for reducing the number of alarms, which is referred to as the false alarm rate, of the stationary targets which are incorrectly declared to be moving targets in the radar images of a two-channel or multiple-channel MTI radar with antenna mainlobes and sidelobes, with the suppression of the stationary target echoes with respect to the moving target echoes within the antenna main lobe being carried out by means of a space time adaptive processing - STAP - filter, **characterized by** the following procedure:

> - application of an STAP filter to the antenna side lobe in the radar image in order to suppress stationary targets in the antenna side lobe,
> - comparison of the amplitude magnitudes or power levels of the range Doppler frequency cells with a constant predeterminable threshold and combination of the alarms obtained in this way, with the only alarms which are used to form clusters being those whose amplitude magnitudes or power levels are above the predeterminable threshold, with alarms first of all being combined in the direction of the Doppler frequency direction on the basis of their minimum distance from one another to form Doppler frequency clusters, and Doppler frequency clusters then being combined in the range direction on the basis of their minimum distance from one another to form range Doppler frequency clusters,
> - comparison of a target function with a test function, with the test function being a cut function of the two-dimensional characteristic function of the amplitude and phase profiles of the antenna main lobe as a function of the Doppler frequency, and the target function being a characteristic function (which is calculated for each alarm) of the amplitude and phase profile of the respective target as a function of the Doppler frequency at the Doppler frequency position of the respective target, and

- use of selection criteria from combined calculation methods (which are applied to the target function and test function) for classification of a respective target alarm as a moving target or as a stationary target alarm, with a correlation of the target function with the test functions being calculated, and the least square errors between the target and the test functions being calculated using the least mean square LMS rule.

2. Method according to Claim 1, **characterized in that** the constant predeterminable threshold is determined from the mean value and the variance of the amplitudes or power levels of all the range Doppler frequency cells.

3. Method according to one of the preceding claims, **characterized in that** the two-dimensional characteristic function of the amplitude and phase profiles of the antenna main lobe are calculated from:

$$X_{char}(f, f') = H_1(f) \cdot H_2(f') - H_2(f) \cdot H_1(f')$$

where

$H_1(f), H_2(f)$ : STAP-filter coefficients
$f, f' \in [f_{min},...,f_{max}]$ : Doppler frequency

4. Method according to one of the preceding claims, **characterized in that** the characteristic function of the amplitude and phase profile of the respective target for each target alarm is calculated from:

$$X_{targ}(f) = H_1(f) \cdot A_2(f_z) - H_2(f) \cdot A_1(f_z)$$

where

$A_1, A_2$ : complex amplitudes of the target alarm
$f$ : Doppler frequency
$f_z$ : Doppler frequency position of the target alarm.

5. Method according to Claim 3, **characterized in that** the test function is a one-dimensional function based on a section for which f' = constant from the two-dimensional characteristic function $X_{char}(f, f')$.

6. Method according to one of the preceding claims, **characterized in that** the correlation of the target function with the test functions and the calculation of the least square errors between the target and the test function are carried out in a process that is carried out in parallel, using the least mean square LMS rule.

7. Method according to Claim 6, **characterized in that** the following four selection criteria for classification of a target as a moving target or a stationary target are extracted from the correlation function and the result of the calculation based on the LMS rule:

1. the target speed estimated for the respective target from the interval between the detected Doppler frequency position $f_z$ and the absolute position of the minimum of the LMS rule,
2. the amplitude of the maximum of the correlation function,
3. the amplitude of the minimum of the LMS rule,
4. the interval between the position of the maximum of the magnitude of the correlation function and the position of the minimum of the logarithmic amplitude of the LMS rule.

8. Method according to Claim 7, **characterized in that** each selection criterion is weighted with a predeterminable probability $P_i$ of the identified target being a moving target.

9. Method according to Claim 8, **characterized in that** the overall probability $P_{overall}$ resulting from the individual probabilities $P_i$ is compared with a threshold value.

**Revendications**

1. Procédé pour réduire le nombre d'alarmes, désigné comme le taux de fausses alarmes, des cibles fixes déclarées à tort comme cibles mobiles dans les images radar d'un équipement radar MTI à deux ou plusieurs canaux avec des lobes principal et secondaire de l'antenne, la suppression des échos des cibles fixes par rapport aux échos des cibles mobiles étant assurée à l'intérieur du lobe principal de l'antenne au moyen d'un filtre STAP, Space-Time Adaptive Processing, **caractérisé par** le déroulement suivant :

   - on applique un filtre STAP au lobe secondaire de l'antenne sur l'image radar pour supprimer les cibles fixes dans le lobe secondaire de l'antenne,
   - on compare les valeurs d'amplitude ou les puissances des cellules de fréquences Doppler des distances avec un seuil constant défini et on regroupe les alarmes ainsi obtenues, seules étant considérées comme clusters, les alarmes dont les valeurs d'amplitudes ou puissances se trouvent au-dessus du seuil défini, ainsi on effectue d'abord un regroupement d'alarmes en clusters de fréquences Doppler, dirigé dans la direction de leur fréquence Doppler, basé sur leur distance mutuelle minimale, et ensuite un regroupement de clusters de fréquences Doppler en clusters de fréquence Doppler de distance, dirigé dans la direction de leur distance, basé sur leur distance mutuelle minimale,
   - on compare une fonction de cible avec une fonction de test, la fonction de test étant une fonction de coupure d'une fonction caractéristique bidimensionnelle des évolutions des amplitudes et des phases du lobe principal de l'antenne en fonction de la fréquence Doppler et la fonction de cible étant une fonction caractéristique, calculée pour chaque alarme, de l'évolution des amplitudes et des phases de la cible correspondante en fonction de la fréquence Doppler à la position de la fréquence Doppler de la cible correspondante et
   - on utilise des critères de sélection à partir de méthodes de calcul combinées qu'on applique à la fonction de cible et à la fonction de test pour la classification d'une alarme de cible correspondante en alarme de cible mobile ou de cible fixe, en calculant une corrélation de la fonction de cible avec les fonctions de tests, et les moindres carrés des erreurs entre la fonction de la cible et les fonctions de tests selon la méthode LMS du Least-Mean-Square.

2. Procédé selon la revendication 1, **caractérisé en ce que** le seuil constant défini est déterminé à partir de la valeur moyenne et de la variance des amplitudes ou des puissances de toutes les cellules de fréquences Doppler des distances.

3. Procédé selon une des revendications précédentes, **caractérisé en ce que** la fonction caractéristique bidimensionnelle des évolutions des amplitudes et des phases du lobe principal de l'antenne est calculée selon

$$X_{carac}(f, f') = H_1(f).H_2(f') - H_2(f).H_1(f')$$

avec

$H_1(f), H_2(f')$ : coefficients du filtre STAP
$f, f' \in [f_{min}, ..., f_{max}]$ : fréquence Doppler.

4. Procédé selon une des revendications précédentes, **caractérisé en ce que** pour chaque alarme de cible, la fonction caractéristique des évolutions des amplitudes et des phases de la cible correspondante est calculée selon

$$X_{cible}(f) = H_1(f).A_2(f_c) - H_2(f).A_1(f_c)$$

avec

$A_1, A_2$ : amplitudes complexes de l'alarme de cible
$f$ : fréquence Doppler
$f_c$ : position de la fréquence Doppler de l'alarme de cible.

5. Procédé selon la revendication 3, **caractérisé en ce que** la fonction de test est une fonction unidimensionnelle selon une coupure avec f' = constante dans la fonction caractéristique bidimensionnelle $X_{carac}(f, f')$.

6. Procédé selon une des revendications précédentes, **caractérisé en ce que** dans un procédé parallèle, on réalise la corrélation de la fonction de cible avec les fonctions de tests et le calcul des moindres carrés des erreurs entre la fonction de la cible et les fonctions de tests selon la méthode LMS du Least-Mean-Square.

7. Procédé selon la revendication 6, **caractérisé en ce qu'**à partir de la fonction de corrélation et du résultat du calcul selon la méthode LMS du Least-Mean-Square, on peut extraire les quatre critères de sélection suivants pour la classification d'une cible en cible mobile ou en cible fixe :

   1. la vitesse de la cible évaluée à partir de la distance entre la position de la fréquence Doppler $f_c$ détectée et la position absolue du minimum de la méthode LMS pour la cible correspondante,
   2. l'amplitude du maximum de la fonction de corrélation,
   3. l'amplitude du minimum de la méthode LMS,
   4. l'écart entre la position du maximum de la valeur de la fonction de corrélation et la position du minimum du logarithme de l'amplitude de la méthode LMS.

8. Procédé selon la revendication 7, **caractérisé en ce que** chaque critère de sélection est pondéré par une probabilité $P_i$ définie avec laquelle la cible identifiée est une cible mobile.

9. Procédé selon la revendication 8, **caractérisé en ce que** la probabilité globale $P_{globale}$ résultant des probabilités individuelles $P_i$ est comparée à une valeur de seuil.

Fig. 1

normierte Frequenz f/f$_0$

Entfernungszellen

Fig. 2

normierte Frequenz f'/f$_0$

Entfernungszellen

Fig. 3

**Fig. 4**

EP 1 341 002 B1

Fig. 5

**Fig. 6a**

Fig. 6b

EP 1 341 002 B1

**Fig. 7a**

Fig. 7b

**Fig. 7c**

**Fig. 7d**